# FASCICULE DE BREVET EUROPEEN

(11) **EP 0 853 527 B1**
(45) Date de publication et mention de la délivrance du brevet: **10.05.2000**
(21) Numéro de dépôt: 96933483.8
(22) Date de dépôt: 03.10.1996
(51) Int. Cl.: B23Q 17/20, B24B 49/04

(54) **DISPOSITIF DE MESURE OU DE CONTROLE DE L'USINAGE D'UNE PIECE CYLINDRIQUE A MOUVEMENT ORBITAL**
MESS-UND REGELGERÄT FÜR DIE BEARBEITUNG VON UMLAUFENDEN ZYLINDRISCHEN WERKSTÜCKEN
DEVICE FOR MEASURING OR CHECKING AN ORBITALLY MOBILE CYLINDRICAL PART DURING MACHINING THEREOF

(30) Priorité: 06.10.1995 FR 9511784; 17.06.1996 FR 9607487
(43) Date de publication de la demande: 22.07.1998
(73) Titulaire: ETAMIC S.A., 14400 SAINT-MARTIN-DES-ENTREES (FR)
(72) Inventeur: ESTEVE, Xavier, CH-2074 Marin (CH)
(74) Mandataire: Robert, Jean-Pierre
(86) Numéro de dépôt international: FR9601545
(87) Numéro de publication internationale: WO9713614

(56) Documents cités:
- EP-A- 0 469 439
- DE-A- 4 419 656
- FR-A- 2 567 058
- US-A- 1 941 456

## Description

La présente invention concerne essentiellement mais non-exclusivement le contrôle dimensionnel du diamètre des manetons de vilebrequin au cours de leur rectification.

On connaît notamment par le document FR 2.567.058 un dispositif qui permet d'effectuer ce type de contrôle. Cependant les moyens qu'il met en oeuvre présentent des inconvénients importants dans des applications où le temps de travail de la machine est un facteur non négligeable du prix de revient des pièces usinées. En effet il est nécessaire avec le dispositif connu d'arrêter le vilebrequin en rotation et de mettre en place manuellement l'appareil au contact du maneton à contrôler. Même en imaginant d'automatiser l'opération de mise en contact de l'appareil de contrôle avec le maneton de vilebrequin et de la même manière, le découplement de ces organes, il reste toujours nécessaire d'arrêter la rotation de ce vilebrequin dans une position angulaire déterminée. Cet appareil connu introduit donc une perte de productivité dans la rectification des manetons.

Pour notamment pallier cet inconvénient, le document WO-A-97/12724 (l'état de la technique selon l'article 54(3) CBE) révèle une machine de rectification pour une pièce cylindrique animée d'un mouvement orbital autour d'un axe, comportant un outil tournant en forme de disque dont le chant coopère avec la pièce et qui est mobile le long d'une direction transversale à l'axe susdit et un dispositif de mesure et/ou de contrôle du diamètre de la pièce, ce dispositif comprenant une tète de mesure attelée à un support, lequel support est équipé d'un organe pour son appui sur la périphérie de la pièce et, pour pouvoir suivre le mouvement orbital de la pièce, est monté mobile par rapport à un bâti, qui est monté également mobile transversalement à cet axe dans un mouvement synchronisé avec celui de l'outil.

Dans l'invention, la tête de mesure est en outre montée pivotante sur le support entre une position active et une position de dégagement.

D'autres avantages et caractéristiques de l'invention ressortiront de la description d'un exemple de réalisation donné ci-après.

Il sera fait référence aux dessins annexés parmi lesquels :
- la figure 1 est une vue schématique d'un dispositif de mesure conforme à l'invention associé à un outil de rectification,
- la figure 2 est une vue suivant F de la figure 1,
- la figure 3 est une vue schématique d'une première variante de réalisation du dispositif représenté à la figure 1,
- la figure 4 est une vue schématique d'une seconde variante de réalisation du dispositif selon l'invention.

Dans les exemples décrits ci-dessous, l'invention est appliquée à la rectification par une meule 1 du maneton 2 d'un vilebrequin dont l'axe de rotation est noté 3 sur les figures. L'axe 3 de rotation du vilebrequin est fixé sur le bâti de la machine qui n'est pas représentée et le maneton 2 décrit autour de cet axe 3 un mouvement orbital symbolisé par le cercle 4 décrit par le centre du maneton 2.

De son côté, la meule 1 est montée tournante autour d'un axe 5 porté par un chariot 6 qui lui se déplace dans un mouvement alternatif AB orthogonal à l'axe 3. La position angulaire du maneton 2 par rapport à l'axe 3 et la position de l'axe 5 par rapport à cet axe 3 sont asservies en fonction d'un programme de rectification déterminé.

Le contrôle de la cote diamétrale du maneton est réalisé de manière connue par une tête de mesure 7 qui possède des palpeurs à l'extrémité d'une fourche 7a permettant de délivrer un signal représentatif du diamètre du maneton 2. Cette tête de mesure est connue en elle-même et est disponible sur le marché.

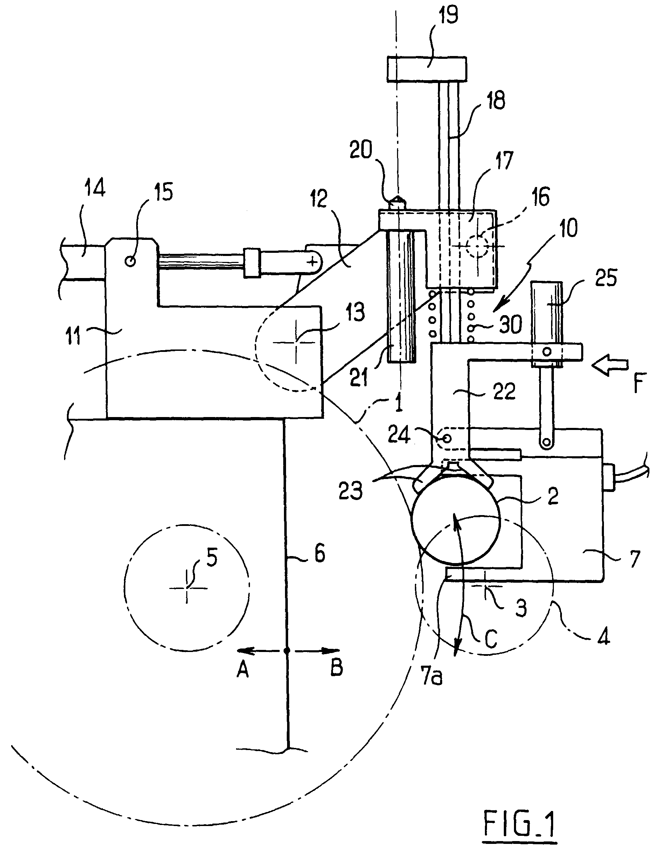

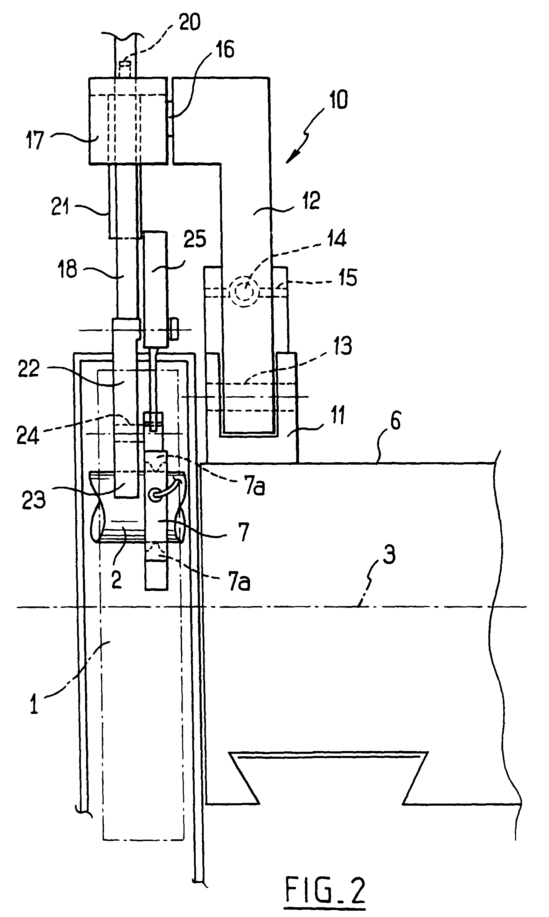

L'invention concerne le dispositif de maintien de cette tête, conçu pour qu'elle soit mise en service et mise hors service le plus simplement possible lors de l'opération d'usinage du maneton 2. Ce dispositif porte la référence générale 10 sur les figures. Aux figures 1 et 2, il comporte tout d'abord une pièce de fixation 11 solidaire du chariot porte-meule 6 à laquelle est articulé un bâti 12 en forme de levier. Le bâti 12 peut pivoter par rapport à la pièce de fixation 11 autour d'un axe 13 et sa position angulaire autour de cet axe est fixée au moyen d'un vérin d'actionnement 14 lui-même articulé en 15 à la pièce de fixation 11.

Le bâti 12 en forme de levier possède à son extrémité opposée à celle articulée en 13 un autre axe d'articulation 16 pour une pièce de guidage 17. Cette pièce de guidage 17 reçoit à coulissement une tige 18, dont la section est de préférence non circulaire pour constituer un moyen anti-rotation de la tige par rapport au guide autour de son axe longitudinal. Dans une variante non représentée équivalente, on peut mettre en oeuvre deux colonnes parallèles de section circulaire reliées entre elles par leurs extrémités avec pour même effet d'empêcher la rotation de l'ensemble coulissant dans le guide.

A l'une de ses extrémités la tige 18 possède un taquet d'entraînement 19 qui s'étend en surplomb de l'extrémité d'une tige 20 de vérin 21 porté par la pièce de guidage 17. La tige 18 possède à son extrémité inférieure, c'est-à-dire au-delà de la pièce de guidage par rapport au taquet 19, un support 22 équipé d'un organe d'appui 23 représenté ici sous la forme d'un V pour venir au contact du maneton 2, ce support 22 portant la tête de mesure 7 au moyen d'un axe d'articulation 24. Un vérin 25 également articulé au support 22 et à la tête de mesure 7 permet de commander le basculement de cette tête autour de son axe 24.

Pour l'explication ci-après du fonctionnement du dispositif on supposera le bâti 12 fixe, c'est-à-dire bloqué par rapport à l'organe de fixation 11 autour de l'axe 13 au moyen du vérin 14. Le bâti constitue donc une potence embarquée avec le chariot 6, à l'extrémité de laquelle la tige 18 lestée à son extrémité inférieure par les éléments 22 et 7, s'étend sensiblement verticalement tout en pouvant osciller autour de l'axe 16, l'amplitude de l'oscillation autour de l'axe 16 pouvant être limitée par des butées non représentées.

Dans le référentiel du chariot 6, le mouvement du maneton est un mouvement alternatif symbolisé par la flèche C. Les extrémités haute et basse de cette flèche C constituent donc un point de rebroussement au niveau duquel la vitesse du maneton 2 dans le référentiel du chariot 6 s'annule. Ainsi, lorsque l'on veut contrôler le diamètre atteint par le maneton en cours d'usinage, on part d'un état du dispositif dans lequel la tige 20 du vérin 21 est sortie si bien qu'elle constitue une butée au glissement vers le bas de la tige 18 dans le guide 17, sous l'effet du poids des équipements 22 et 7 que possède cette tige 18 en partie inférieure, le V d'appui 23 du support 22 étant éloigné du maneton 2. Par ailleurs la tige du vérin 25 est rétractée si bien que la tête de mesure 7 est basculée vers le haut autour de l'axe 24.

Grâce au vérin 21, on pilote la descente de cet équipage 7, 22 jusqu'au voisinage de la position haute atteinte par le maneton 2. Lorsque ce maneton est effectivement dans cette position, on procède à l'accotement de l'organe d'appui 23 sur le maneton 2 et cet appui étant réalisé à vitesse nulle ou sensiblement nulle puisqu'au voisinage du point de rebroussement haut du maneton, on rétracte complètement la tige 20. L'équipage mobile coulissant dans la pièce de guidage 17 s'appuie donc sous l'effet de son propre poids sur le maneton 2 par l'organe d'appui 23. Il suit donc les mouvements de ce maneton, ce qui est possible d'une part par le coulissement de la tige 18 dans le guide 17 et d'autre part, puisque le mouvement alternatif du maneton n'est pas tout à fait rectiligne, grâce à l'articulation 16 de la pièce de guidage 17 sur le bâti 12 qui autorise l'oscillation de la tige 18. L'appui de l'organe 23 sur le maneton 2 peut être assisté par tout organe de rappel approprié (ressort, vérin...) disposé entre la pièce de guidage 17 et le support 22 comme symbolisé par le ressort 30 sur la figure 1.

L'accotement du support 22 sur le maneton 2 étant réalisé, en commandant le vérin 25 on commande le pivotement de la tête 7 de manière à placer l'extrémité de sa fourche de mesure 7a au droit d'un diamètre du maneton. Dès que la cote est atteinte, la tête de mesure émet un signal pour d'une part faire cesser l'usinage et d'autre part relever la tête 7 par rétraction du vérin 25 et après, soulever l'ensemble de l'équipage mobile au moyen du vérin 21, ceci pendant la fin de l'exécution de l'usinage. Au besoin, le vérin 14 peut être également commandé en rétraction pour faire pivoter le bâti 12 autour de l'axe 13 et dégager complètement l'espace situé au voisinage de la meule 1. Il est alors possible de passer au maneton suivant du vilebrequin en manoeuvrant le chariot portant l'axe 3 où, si l'usinage des manetons est terminé, de mettre en place le vilebrequin suivant, ce de manière connue.

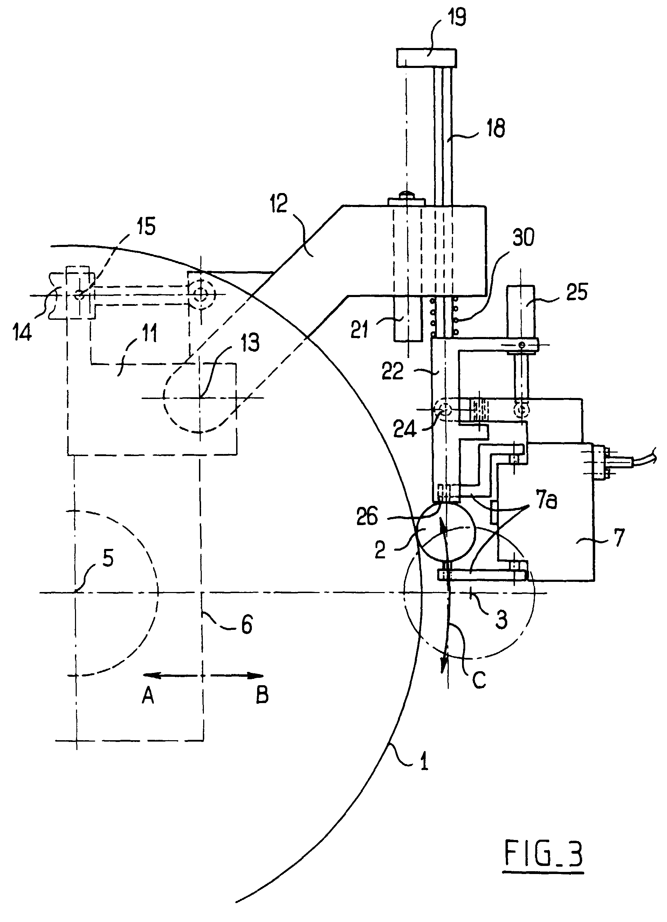

Dans la variante illustrée par la figure 3 on retrouve certains des éléments déjà décrits avec les mêmes références. On notera que, dans ce cas, la pièce de guidage 17 est solidaire du bâti 12 (voire en une seule pièce avec lui).

Par ailleurs le support 22 est dépourvu de V d'appui. L'appui de ce support sur le maneton 2 est réalisé par l'intermédiaire d'une surface plane 26 portée par l'extrémité inférieure de ce support. Cet appui est glissant sur le maneton 2, ce qui permet de s'affranchir. Cette surface d'appui peut être réduite à une simple ligne, comme par exemple la génératrice inférieure d'une tige transversale au maneton 2 portée par le support 22.

Bien entendu la fourche de mesure 7a qui est attelée à cette surface d'appui n'est pas maintenue constamment en regard d'un diamètre du maneton : il existe un mouvement relatif horizontal entre le maneton et la surface 26 donc la fourche 7a. On peut, compte tenu de la géométrie du dispositif et des dimensions des différents éléments, prévoir un programme de calcul correctif des mesures relevées pour connaître en permanence la valeur du diamètre du maneton.

Une manière élégante de pallier cet inconvénient réside dans le réglage du dispositif de manière telle que dans un référentiel lié au bâti 12, le lien en arc de cercle du centre du maneton soit coupé par l'axe vertical joignant les deux palpeurs de mesure de la fourche 7a. Ainsi, sur une orbite du maneton il y aura quatre positions correspondant à une mesure du diamètre exact du maneton. Ces quatre positions se réduisent à deux dans les cas où soit l'axe vertical joignant les deux palpeurs de mesure coupe le lieu en arc de cercle du centre du maneton à chacun des points de rebroussement du centre, soit lorsque cet axe est tangent à ce lieu en arc de cercle.

Ces valeurs sont d'autant plus faciles à sélectionner qu'elles constituent un maximum de toutes les valeurs lues sur la fraction de tour correspondante. Si, pour cause d'usure ou de taillage de la meule, le rayon de celle-ci diminue d'une valeur telle que l'axe vertical joignant les deux palpeurs de mesure risque de ne plus couper le lieu en arc de cercle du centre du maneton, il faut procéder à un ajustement de la fourche 7a par rapport à l'ensemble coulissant. Dans la pratique les meules utilisées ne s'usent pratiquement pas, donc aucun ajustement fréquent n'est nécessaire.

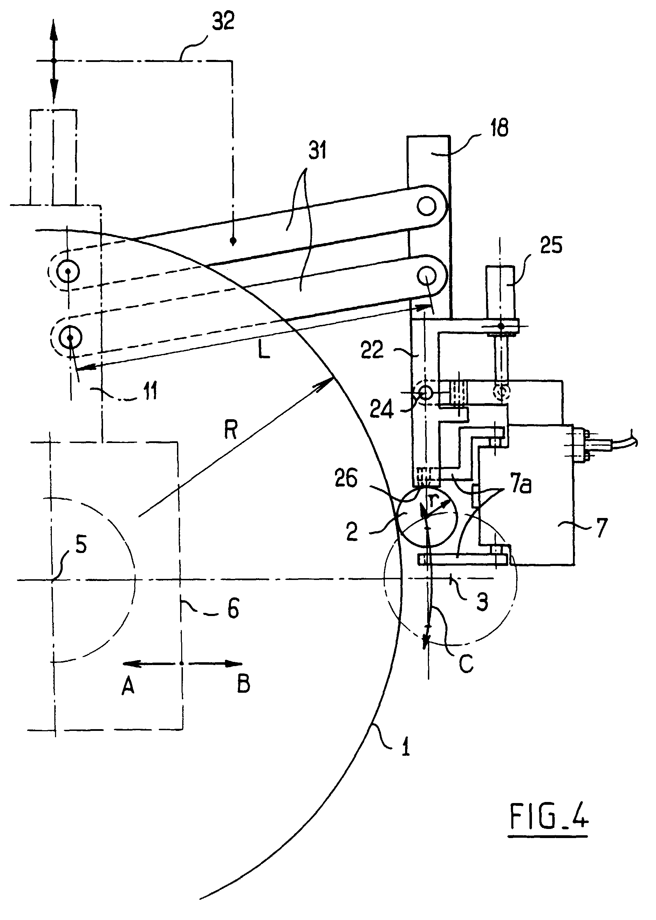

Enfin en se reportant à la figure 4, on notera que la variante représentée diffère de celle de la figure 3 en ce qu'elle ne comporte plus de bâti 12. Celui-ci est remplacé par un jeu de biellettes parallèles 31 articulées entre le chariot 11 et le support 18, 22 (tige) portant la surface (ou ligne) d'appui 26. Ce support 18, 22 peut donc se déplacer parallèlement à lui-même, chacun de ses points décrivant un arc de cercle de rayon L égal à la distance séparant les articulations des biellettes. Dans le cas où les biellettes 31 sont parallèles à la droite joignant les centres 3 et 5 de la figure lorsque le centre du maneton est sur cette droite, si cette longueur L est égale à la somme du rayon R de l'outil 1 et du rayon r du maneton 2, on pourra obtenir une mesure en continu du diamètre du maneton entre les palpeurs de la fourche 7a. Une longueur L inférieure à cette source permettrait seulement quatre valeurs exactes par orbite comme dans le cas précédent. Une longueur L supérieure à cette valeur permettrait l'obtention de deux valeurs par tour orbital.

On peut prévoir un réglage possible de la longueur L par tout moyen approprié pour adapter le dispositif aux différents rayons R et r qu'il peut rencontrer. L'ensemble biellettes 31, support 18 et tête de mesure 7 sera avantageusement attelable à un organe de soutien et de manoeuvre 32 pour le dégager de l'appui sur le maneton lorsqu'il s'agira de passer à la rectification d'un maneton suivant.

Dans les exemples ci-dessus décrits, la pièce 11 est fixée au chariot 6 en porte-meule. Ce n'est pas sortir du cadre de l'invention que de prévoir la pièce 11 attelée à un organe qui soit différent du chariot porte-meule mais qui soit asservi à son mouvement de manière à assurer les fonctions de contact et de mesure dans les mêmes conditions.

## Revendications

1. Machine de rectification pour une pièce (2) cylindrique animée d'un mouvement orbital autour d'un axe (3), comportant un outil tournant (1) en forme de disque dont le chant coopère avec la pièce et qui est mobile le long d'une direction transversale à l'axe (3) susdit et un dipositif de mesure et/ou de contrôle du diamètre de la pièce (2), ce dispositif comprenant une tête de mesure (7) attelée à un support (18, 22), lequel support est équipé d'un organe (23, 26) pour son appui sur la périphérie de la pièce (2) et, pour pouvoir suivre le mouvement orbital de la pièce (2), est monté mobile par rapport à un bâti (12, 31) monté lui-même mobile transversalement à cet axe dans un mouvement synchronisé avec celui de l'outil (1), la tête de mesure (7) étant montée pivotante sur le support (18, 22) entre une position active et une position de dégagement, avec un vérin (25) pour la déplacer entre ces deux positions et la maintenir dans l'une ou l'autre de celles-ci.

2. Machine selon la revendication 1, caractérisée en ce que l'organe (23) coopère par appui sur la pièce (2) le long de deux génératrices de la pièce (2) et en ce que le support (18, 22) est monté coulissant dans une pièce de guidage (17) elle-même montée oscillante (16) sur le bâti (12).

3. Machine selon la revendication 1, caractérisée en ce que l'organe (26) coopère par appui sur la pièce (2) par au plus une génératrice de la pièce (2), et en ce que le support est monté coulissant dans un guide fixe du bâti.

4. Machine selon la revendication 1, caractérisée en ce que l'organe (26) d'appui repose sur au plus une génératrice de la pièce (2) et en ce que le bâti est en forme de deux biellettes (31) articulées au support (18) et à une structure fixe (11) par rapport à l'outil pour former avec eux un parallélogramme articulé.

5. Machine selon la revendication 4, caractérisée en ce que la longueur (L) entre articulations des biellettes est égale à la somme des rayons de l'outil (R) de rectification et de la pièce cylindrique (r).

6. Machine selon la revendication 4 ou la revendication 5, caractérisée en ce que la longueur entre articulations des biellettes est réglable.

7. Machine selon la revendication 2 ou la revendication 3, caractérisée en ce que le support (18, 22) est formé par une tige (18) sensiblement verticale à l'extrémité inférieure de laquelle sont installés l'organe d'appui (23) et la tête de mesure (7), l'autre extrémité de cette tige (18) étant équipée, au-delà de la pièce de guidage (17) ou du guide, d'un taquet (19) d'entraînement pour coopérer avec la tige (20) d'un vérin (21) de soulèvement du support attelé au bâti ou à la pièce de guidage.

8. Machine selon la revendication 7, caractérisée en ce que la tige-support (18) est cylindrique à section non circulaire.

9. Machine selon la revendication 7, caractérisée en ce que la tige est formée de deux colonnes cylindriques parallèles.

## Patentansprüche

1. Schleifmaschine für ein zylindrisches Werkstück (2), das zu einer umlaufenden Bewegung um eine Achse (3) angeregt wird, mit einem drehbaren Werkzeug (1) in Form einer Scheibe, dessen Schmalseite auf das Werkstück einwirkt und das entlang einer zur obengenannten Achse (3) querlaufenden Richtung bewegbar ist, und mit einer Meßvorrichtung und/oder einer Vorrichtung zum Steuern des Durchmessers des Werkstücks (2), die über einen Meßkopf (7) verfügt, der an einem Träger (18, 22) befestigt ist, wobei dieser Träger zu seiner Auflage auf der Außenfläche des Werkstücks (2) mit einem Organ (23, 26) ausgestattet ist und relativ zu einem Rahmen (12, 31) beweglich montiert ist, um der umlaufenden Bewegung des Werkstücks (2) folgen zu können, wobei dieser Rahmen (12, 31) für eine mit der Bewegung des Werkzeugs (1) synchrone Bewegung wiederum selbst in Querrichtung zur Achse beweglich montiert ist, wobei der Meßkopf (7) an dem Träger (18, 22) zwischen einer Arbeitsposition und einer Ruheposition schwenkbar gelagert ist und eine Hebevorrichtung (25) vorgesehen ist, durch die der Meßkopf zwischen diesen beiden Positionen bewegt und in jeweils der einen oder der anderen dieser Positionen gehalten wird.

2. Maschine nach Anspruch 1, dadurch **gekennzeichnet**, daß das Organ (23) durch seine Auflage auf dem Werkstück (2) entlang zweier Mantellinien des Werkstücks (2) auf dieses einwirkt, und der Träger (18, 22) in einem Führungselement (17) verschiebbar gelagert ist, wobei dieses wiederum selbst schwenkbar (16) auf dem Rahmen (12) montiert ist.

3. Maschine nach Anspruch 1, dadurch **gekennzeichnet**, daß das Organ (26) durch seine Auflage auf dem Werkstück (2) auf höchstens einer Mantellinie des Werkstücks (2) auf dieses einwirkt, und der Träger bewegbar in einem unbeweglichen Führungsglied des Rahmens montiert ist.

4. Maschine nach Anspruch 1, dadurch **gekennzeichnet**, daß das Auflageorgan (26) auf höchstens einer Mantellinie des Werkstücks (2) aufliegt, und der Rahmen in Form zweier Schwingarme (31) vorhanden ist, die über Gelenke beweglich am Träger (18) und an einer relativ zum Werkzeug unbeweglichen Struktur (11) befestigt sind, wodurch der Rahmen mit diesen ein bewegliches Parallelogramm ausbildet.

5. Maschine nach Anspruch 4, dadurch **gekennzeichnet**, daß die Länge (L) zwischen Gelenken der Schwingarme gleich der Summe der Radien des Schleifwerkzeugs (R) und des zylindrischen Werkstücks (r) ist.

6. Maschine nach Anspruch 4 oder 5, dadurch **gekennzeichnet**, daß die Länge zwischen Gelenken der Schwingarme einstellbar ist.

7. Maschine nach Anspruch 2 oder 3, dadurch **gekennzeichnet**, daß der Träger (18, 22) von einer Stange (18) gebildet wird, an deren unterem Ende das Auflageorgan (23) und der Meßkopf (7) im wesentlichen vertikal befestigt sind, wohingegen das andere Ende dieser Stange (18) oberhalb des Führungselementes (17) oder der Führung mit einem Mitnehmer (19) versehen ist, der mit der Stange (20) einer Hebevorrichtung (21) zum Anheben des Trägers zusammenwirkt, der wiederum an dem Rahmen oder dem Führungselement befestigt ist.

8. Maschine nach Anspruch 7, dadurch **gekennzeichnet**, daß die Trägerstange (18) die Form eines Zylinders aufweist, dessen Querschnitt nicht kreisförmig ist.

9. Maschine nach Anspruch 7, dadurch **gekennzeichnet**, daß die Stange aus zwei parallel verlaufenden, zylindrischen Säulen besteht.

## Claims

1. A machine for grinding a cylindrical piece (2) in orbital motion about an axis (3), comprising a rotatable disk-shaped tool having an edge for cooperating with the piece, said tool being movable in a transverse direction relative to said axis (3) and one device for measuring and/or inspecting the diameter of the piece (2), said device comprising a measurement head (7) coupled to a support (18, 22), which support is provided with a member (23, 26) for contacting the periphery of the piece and is movably mounted relative to a frame (12, 31) in order to follow the orbital motion of the piece (2), said frame being movable transversely to said axis synchronously with the motion of the tool (1), the measurement head (7) being pivotally mounted on the support (18, 22) to pivot between an active position and a disengaged position with an actuator (25) for displacing it between those positions and for holding it in either of them.

2. A device according to claim 1, characterized in that the member (23) co-operates by bearing against the piece (2) along two generator lines of the piece (2), and in that the support (18, 22) is slidably mounted in a guide piece (17) itself mounted to oscillate (16) on the frame (12).

3. A device according to claim 1, characterized in that the member (26) co-operates by bearing against the piece (2) via no more than one generator line of the piece (2), and in that the support is slidably mounted in a fixed guide of the frame.

4. A device according to claim 1, characterized in that the bearing member (26) rests against no more than one generator line of the piece (2), and in that the frame is in the form of two links (31) hinged to the support (18) and to a structure (11) that is fixed relative to the tool so as to form a hinged parallelogram linkage between them.

5. A device according to claim 4, characterized in that the length (L) between the hinges of the links is equal to the sum of the radii of the grinding tool (R) and of the cylindrical piece (r).

6. A device according to claim 4 or claim 5, characterized in that the length between the hinges of the links is adjustable.

7. A device according to claim 2 or 3, characterized in that the support (18, 22) is constituted by a substantially vertical rod (18) having the bearing member (23) and the measurement head (7) installed at the bottom end thereof, the other end of the rod (18) on the other side of the guide piece (17) or of the guide, being fitted with a driver dog (19) for co-operating with the rod (20) of a support-lifting actuator (21) coupled to the frame or to the guide piece.

8. A device according to claim 7, characterized in that the support rod (18) is cylindrical and of non-circular section.

9. A device according to claim 7, characterized in that the rod comprises two parallel cylindrical columns.
